# EUROPÄISCHE PATENTSCHRIFT

(11) **EP 3 218 215 B1**
(45) Veröffentlichungstag und Bekanntmachung des Hinweises auf die Patenterteilung: **17.01.2024**
(21) Anmeldenummer: 15788329.9
(22) Anmeldetag: 29.10.2015
(51) Int. Cl.: B60H 1/32, B65D 88/74, F25D 19/00, F25D 29/00, F25D 11/00, F25B 27/00, F25D 17/06

(54) **KÜHLSYSTEM**
COOLING SYSTEM
SYSTÈME FRIGORIFIQUE

(30) Priorität: 14.11.2014 DE 102014016939
(43) Veröffentlichungstag der Anmeldung: 20.09.2017
(73) Patentinhaber: Liebherr-Transportation Systems GmbH & Co. KG, 2100 Korneuburg (AT)
(72) Erfinder: KITANOSKI, Filip, 1060 Wien (AT); HILLE, Andreas, 71272 Renningen (DE); ALLERSTORFER, Harald, 97980 Bad Mergentheim (DE); BODNER, Gottfried, 3550 Gobelsburg (AT); TONCHEV, Anton, 1220 Wien (AT); SCHILLING, Florian, 1170 Wien (AT); PRESETSCHNIK, Andreas, 1160 Wien (AT); RATHBAUER, Michael, 1210 Wien (AT); HANDL, Manfred, 3500 Krems (AT)
(74) Vertreter: Laufhütte, Dieter
(86) Internationale Anmeldenummer: PCT/EP2015/002167
(87) Internationale Veröffentlichungsnummer: WO 2016/074769

(56) Entgegenhaltungen:
- EP-A1- 1 022 171
- WO-A1-2011/055163
- DE-A1-102006 045 699
- US-B1- 6 761 038
- "LIQUID-COOLED CONDENSER SYSTEM FOR A TRANSPORT REFRIGERATION UNIT", IP.COM JOURNAL, IP.COM INC., WEST HENRIETTA, NY, US, 3. Dezember 2009 (2009-12-03), XP013135777, ISSN: 1533-0001

## Beschreibung

Die Erfindung betrifft eine Transporteinheit, insbesondere für einen Kühl-Sattelauflieger, Kühlanhänger oder einen Kühltransportcontainer,

umfassend ein Kühlsystem nach dem Oberbegriff des Anspruchs 1.

Derartige Kühlsysteme für Transporteinheiten sind bereits hinlänglich bekannt. Dokument EP 1 022 171 A1 zeigt ein gattungsgemäßes Kühlsystem. Üblicherweise besteht ein Kühlsystem aus einer Kühleinheit und einem zu konditionierenden Ladegutraum. Die Kühleinheit und der Ladegutraum sind über Luftschnittstellen miteinander verbunden, über die die entsprechend gekühlte bzw. aufgewärmte Luft jeweils ausgetauscht wird. Als Energiequelle für den Antrieb der Kühleinheit wird üblicherweise ein Dieselaggregat verwendet. Beim stationären Betrieb können die Kühlaggregate auch vom Netz gespeist werden. Die Kühleinheiten sind üblicherweise als Kaltdampfanlagen ausgeführt. Kernelement der entsprechenden Kühleinheiten ist ein einzelner, zentraler Kältekreislauf, der die aus der zu kühlenden Transporteinheit angesaugte Umluft abkühlt, entfeuchtet und wieder in die Transporteinheit einbläst. Bei den bekannten Systemen werden die Zulüfter sowie die Verflüssigerlüfter mit gleicher Drehzahl und Regelstrategie wie der Verdichter betrieben.

Die Anlagenleistung für ein Kühlsystem zur Kühlung eines Kühl-Sattelaufliegers ist üblicherweise so ausgelegt, dass ein unbeladener Kühl-Sattelaufleger innerhalb von sechs Stunden von einer maximalen Starttemperatur von 30° Celsius auf einen Sollwert von -20° Celsius abgekühlt werden kann. Geladene, aber noch nicht auf Transporttemperatur gebrachte Ware soll so schnell wie möglich unter Einhaltung von warenspezifischen Zulufttemperaturlimits auf den geforderten Sollwert abgekühlt werden.

Die notwendige Kälteleistung für den stationären Betrieb, beispielsweise für eine Temperatureinstellung im Kühl-Sattelauflieger von -20°, ist nun viel geringer als die notwendige Anlagenleistung zur Abkühlung der gesamten Transporteinheit. Zur stationären Temperatureinstellung müssen lediglich die Einflüsse der Transmissionswärmeverluste, der Strahlungswärme und der Türöffnungen berücksichtigt werden.

Da das Kühlsystem jedoch zumeist nur im stationären Kühlbetrieb betrieben wird, werden die derzeit eingesetzten Kühlsysteme zum größten Teil der eingesetzten Zeit in Teillast betrieben. Ein entsprechender Teillastzustand muss aber durch komplexe Eingriffe und Regelorgane im Kältekreislauf erzeugt werden. Dieser Eingriff in den Kältekreislauf führt zwangsweise zu einer Reduzierung des Anlagenwirkungsgrads und somit zu einem erhöhten Kraftstoffverbrauch und erhöhten Betriebskosten.

Der Aufbau der derzeit eingesetzten Kühlsysteme hat einen weiteren Nachteil. Die Tatsache, dass ein einzelner Kältekreislauf verwendet wird, führt dazu, dass nur ein einzelner, zentraler Verdampfer verwendet wird, mit dem die Umluft abgekühlt und entfeuchtet wird. Da bei einer Sollwerttemperatur von 0° Celsius die Verdampfungstemperatur im Verdampfer unter dem Gefrierpunkt liegt, bildet sich zwischen den Lamellen des Verdampfers Eis durch gefrierendes Kondenswasser. Diese Eisbildung verhindert die Durchströmung des Verdampfers und die Abkühlung des Zuluftmassenstroms. Aus diesem Grund muss das gesamte Kälteaggregat regelmäßig in den Abtaumodus geschaltet werden, um den Verdampfer zu enteisen. Dazu werden die Lüfter abgestellt und die Kühlung des Frachtraums wird unterbrochen. Die Enteisung des Verdampfers geschieht dabei entweder über den Kältekreislauf, indem heißes Kältemittelgas direkt vom Hochdruckausgang des Verdichters in den Eingang des Verdampfers geleitet wird. Alternativ erfolgt dies aber auch über in den Verdampfer integrierte elektrische Widerstandsheizkörper. Beide Verfahren erwärmen den Verdampfer, sodass das Eis an der Lamelle des Wärmetauschers geschmolzen wird. In beiden Fällen wird allerdings durch den Abtauprozess Wärme in die Transporteinheit eingebracht. Somit kann im Abtauzeitraum das Kühlsystem die Transporteinheit nicht mehr kühlen sondern führt der Transporteinheit Wärme zu, sodass die Temperatur im Transportraum ansteigt. Soweit die Temperatur über den Temperatursollwert in der Transporteinheit ansteigt, kann dies zu unerwünschten und für den Auftraggeber bzw. Warenabnehmer inakzeptablen Unterbrechungen der Kühlkette führen.

Zur Energieversorgung der bekannten Kühlsysteme werden üblicherweise zwei unterschiedliche Prinzipien eingesetzt. Einerseits werden die wesentlichen Komponenten des Kühlkreislaufs mechanisch angetrieben. Gemäß einer anderen Versorgungsstrategie werden sämtliche Systemkomponenten, d.h. die kühl- und kältetechnischen Komponenten, elektrisch betrieben.

Im ersten Fall sind Aktuatoren des Systems mechanisch an den Dieselmotor gekoppelt. Der Verdichter der Verdichtereinheit wird direkt am Dieselaggregat über eine Kupplung angekoppelt. Die Zuluft- und Verdichterlüfter werden über ein komplexes Keilriemensystem angetrieben. Derartige Systeme können zu einem Betrieb im stationären Betrieb, indem sie an ein elektrisches Netz angeschlossen werden, noch einen Elektromotor aufweisen, der im Dieselbetrieb nicht aktiviert ist. Im Netzbetrieb kann nach Abkopplung des Dieselaggregats das System dann mit dem Elektromotor betrieben werden. Nachteilig bei diesem mechanisch angetriebenen System ist neben der eingeschränkten Regelgüte eine signifikante Komponentenzahl mit hohem Abnutzungsgrad, die zu hohem Wartungsaufwand und Kosten führt.

Bei einem vollelektrischen System, das bei derzeit eingesetzten Kühlsystemen ebenfalls bereits verwendet wird, wandelt ein Dieselmotor mit entsprechend angekoppeltem Generator die im Kraftstoff gebundene chemische Energie in elektrische Energie um. Alle Komponenten, einschließlich des Verdichters und der diversen Lüfter, werden unmittelbar elektrisch angetrieben. Vorteilhaft bei diesem System ist es, dass Verschleißteile reduziert und mechanische Verluste minimiert werden. Nachteilig ist allerdings die Komplexität des einzusetzenden Reglers. Aufgrund des unterschiedlichen Energiebedarfs beim anfänglichen Abkühlen der Transporteinheit im Vergleich zu einem stationären Betrieb und dem dadurch erforderlichen Teillastbetrieb muss bei den Regelstrategien zur Minimierung des Kraftstoffeinsatzes auch bei Einsatz eines komplexen Reglers immer noch ein Kompromiss gemacht werden.

Aus der EP 1 046 543 B1 ist ein gattunsgemäßes elektrisch betriebenes Kühlsystem bekannt. Hier wird über ein Kühlsystem ein Transportanhänger, der an einer motorisierten Zugmaschine als Kühl-Sattelauflieger aufgesetzt werden kann, über ein kompaktes Kühlsystem gekühlt, das außen an der Anhängervorderwand derart angebracht ist, das es nach vorne in Richtung zur Zugmaschine absteht. Sämtliche Komponenten des Kühlsystems sind in einem durch ein Gehäuse umgebenen Rahmen angeordnet. Als Generator zur Versorgung der einzelnen Komponenten des Kühlsystems mit elektrischem Strom ist aufgrund der geringen Platzverhältnisse ein Permanentmagnet-Synchrongenerator eingesetzt worden, der als maschinenbetriebene Leistungseinheit im Unterschied zu anderen Generatoren klein genug bauen soll, um hier als integral angebrachter maschinengetriebener Generator den knappen Platzanforderungen zu genügen. Trotzdem müssen der Generator und der Dieselmotor in einem ungeregelten Netz für die bei maximaler Leistung entstehenden Anlaufströme dimensioniert werden.

Bei diesem vorbekannten Kühlsystem wird jedoch eine einzige Kaltdampfanlage verwendet, die im stationären Kühlbetrieb in Teillast gefahren werden muss, sodass sich die zuvor genannten Nachteile ergeben. Darüber hinaus muss der gesamte Antriebsstrang der Kühleinheit auf die erhöhte Leistungsaufnahme und die daraus resultierenden Anlaufströme zum Herunterkühlen der Transporteinheit ausgelegt sein. Dies führt zu einem erhöhten Platzbedarf.

Aufgabe der vorliegenden Erfindung ist es, ein gattungsgemäßes Kühlsystem derart weiter zu bilden, dass sowohl der Platzbedarf wie auch der Energiebedarf weiter verringert werden kann.

Erfindungsgemäß wird diese Aufgabe durch die Kombination der Merkmale des Anspruchs 1 gelöst. Hierbei wird ein vollständig neues Konzept für ein Kühlsystem geschaffen, indem ein Kühlsystem für eine Transporteinheit bereitgestellt wird, bei der die Kühleinheit mindestens zwei gleich aufgebaute austauschbare Kältekreismodule aufweist, die jeweils z. B. einen Kältemittelkreislauf mit Verdampfereinheit, Verflüssigereinheit und Verdichtereinheit enthalten. Die Lösung der vorgenannten Aufgabe liegt also im Wesentlichen darin, dass der Gerätekreislauf nunmehr modular aufgebaut ist. Das Gesamtsystem besteht aus zwei oder mehr unabhängigen und voneinander getrennten Kältekreismodulen. Jedes Kältekreismodul ist so ausgelegt, dass es zumindest den stationären Kältebedarf einer Transporteinheit, also beispielsweise eines Kühl-Sattelaufliegers, abdeckt. Das jeweilige Kältemodul kann daher derart ausgelegt werden, dass es aus einem einfachen Kältekreislauf ohne Nutzung von aufwendigen kältetechnischen Teillast-Regelelementen besteht. Über eine Zu- und Abschaltung der unabhängigen Kältekreismodule kann die Gesamtkälteleistung der Kühleinheit an die Lastanforderung der Transporteinheit, also beispielsweise des Kühl-Sattelaufliegers, ohne eine Verschlechterung des Anlagenwirkungsgrades angepasst werden. Dass die Kältekreismodule gleich aufgebaut sind, bedeutet, dass diese grundsätzlich die gleichen Komponenten enthalten. Die Dimensionierung dieser Komponenten und das jeweils eingesetzte Kältemittel können bei den gleichen Kältekreismodulen jedoch untereinander variieren.

Durch eine intelligente Betriebs-, Regel- und Einschaltstrategie der unabhängigen Kältekreismodule ist es möglich, die Leistungsaufnahme des Kühlsystems und somit die Antriebsleistung des Antriebsstrangs vor allem beim Starten und im Teillastbereich zu minimieren. Die Kälteleistung kann nämlich durch einfaches Abschalten einzelner Kältemodule reduziert werden. Ein sequenzielles Einschalten der Kältekreismodule wiederum führt zur Reduzierung von Einschaltströmen, sodass besonders vorteilhaft gerade beim Anfahren des Kühlkreislaufs die vom Generator bereitzustellende Anfahrleistung reduziert werden kann.

Durch die Verwendung der Kältekreismodule kann auch die eingangs genannte Abtauproblematik, die bei regelmäßigen Abtauen der Kühleinheiten entsteht, gelöst werden. Hierzu wird bei dem erfindungsgemäßen modularen Aufbau immer nur ein Kältemodul abgetaut, während ein bzw. mehrere weitere Kältekreismodule im Kühlmodus betrieben werden können. Die Transmissionslast kann hier auch im Abtaumodus aufgenommen werden.

Hierzu kann der Verdampfer des Kältekreismoduls, das sich im Abtaumodus befindet, z.B. über ein Luftklappensystem vom Innenraum der Transporteinheit abgetrennt werden, sodass die Wärme des Abtauvorgangs nicht in die Transporteinheit gelangt.

Erfindungsgemäß ist jedes Kältekreismodul direkt mit einem in der Kühleinheit montierten Zulüfter verbunden werden. Im Abtaumodus wird dann nur dieser Zulüfter abgeschaltet, sodass keine Abtauwärme in die Transporteinheit eingebracht wird. Vorteilhafte Ausgestaltungen der Erfindung ergeben sich aus den sich an den Hauptanspruch anschließenden Unteransprüchen.

Demnach ist die Kühleinheit in einem gemeinsamen Gehäuse platzsparend angeordnet, wobei in dem Gehäuse insbesondere ein zentraler Stromgenerator, ein diesen antreibender Verbrennungsmotor, vorzugsweise ein Dieselmotor, und/oder eine andere Primärenergiequelle, wie beispielsweise eine Brennstoffzelle, eine gemeinsame Batterie, ein zentrales elektrisches Energieversorgungssystem, mindestens ein gemeinsamer Zuluftlüfter und mindestens ein gemeinsamer Verflüssigerlüfter zusammen mit den mindestens zwei auswechselbaren Kältekreismodulen angeordnet sind.

Besonders vorteilhaft ist der zentrale Stromgenerator ein selbst- oder fremderregter Asynchron- oder Synchrongenerator. Aufgrund der Tatsache, dass die gesamte Kühleinheitskonzeption aufgrund des modularen Aufbaus zu einer Verkleinerung des Platzbedarfs führt, steht nunmehr genügend Platz zur Verfügung, als zentralen Stromgenerator einen selbst- oder fremderregten Asynchron- oder Synchrongenerator zu verwenden, der gegenüber dem im Stand der Technik verwendeten speziellen Permanentmagnet-Synchrongenerator im vorliegenden Anwendungsfall eine Reihe von Vorteilen, wie beispielsweise Robustheit und Kostenvorteile, hat. Gemäß einer weiteren bevorzugten Ausgestaltung der Erfindung weist die Kühleinheit drei Kältekreismodule auf, die bei Bedarf zur Bereitstellung der geforderten Kälteleistung zu- und abschaltbar sind. Hier kann das dritte vorgesehene Kältekreismodul einerseits den gleichen Aufbau aufweisen, wie die anderen Kältekreismodule. Es kann aber auch ein Kältekreismodul als drittes Kältekreismodul eingesetzt werden, das ein sogenanntes kryogenisches System aufweist. Hier handelt es sich um ein sogenanntes "total loss" System, bei welchem im Kältekreismodul z.B. flüssiger Stickstoff oder Kohlendioxid bereitgestellt wird, das in einem Tank gespeichert und über ein Sprühsystem in die Transporteinheit eingespritzt und dort verteilt oder über einen Luftwärmetauscher zur Abgabe der Kühlleistung verdampft werden kann. Beim Einspritzvorgang verdampfen die Medien und kühlen somit den Transportraum ab und reduzieren die Temperatur gleichmäßig. Durch einen pneumatischen Regelaktuator kann die Sollwerttemperatur dabei noch geregelt werden. Mittels eines derartigen Moduls kann eine sehr schnell Vorkühlzeit sowie ein leiser Betrieb der Kühleinheit erreicht werden. Über ein derartiges kryogenisches Kältekreismodul kann insbesondere die Abkühlzeit bei der Inbetriebnahme reduziert werden. Andererseits kann der Einsatz eines derartigen kryogenischen Kältekreismoduls als Unterstützungsmaßnahme bei der Inbetriebnahme der Kühlung dazu genutzt werden, insgesamt eine geringer dimensionierte Antriebseinheit einzusetzen.

Gemäß der Erfindung ist die Kälteleistung eines Kältekreismoduls so ausgelegt, dass die für die Beibehaltung des stationären Kühlbetriebs notwendige Kälteleistung zur Verfügung gestellt werden kann.

Weiterhin sind die Kältekreismodule gemäß der Erfindung sequenziell abtaubar, wobei sie vom Kühlraum trennbar sind, während mindestens ein weiteres Kältekreismodul die Kühlleistung zur kontinuierlichen Kühlung des Kühlraums aufrechterhält.

Gemäß eines weiteren Gedanken der Erfindung können mindestens zwei Kältekreismodule entsprechende unterschiedliche Temperaturzonen im Kühlraum versorgen.

Dabei kann auch ein Kältekreismodul zur Kühlung einer bestimmten Temperaturzone im Kühlraum geteilt ausgeführt sein, wobei die Verdampfereinheit, das Expansionsventil und der Zuluftlüfter in der Temperaturzone im Kühlraum angeordnet sind und über eine Flüssigkeits- und Saugleitung mit der im Kältekreismodul verbliebenen Verdichtereinheit und der Verflüssigereinheit verbunden sind.

Die Kältemodule können besonders vorteilhaft als Austauscheinheit entnehmbar und sicher gekapselt transportierbar sein. Hierdurch kann zunächst der Austausch der Kältekreismodule entsprechend dem speziellen Anwendungsfall und dem Temperaturbereich konfiguriert werden. So ist eine warenspezifische Konfiguration des Kälteaggregats möglich. Es können auf den gewünschten Temperaturbereich hin optimierte Kältemittel in einem entsprechenden Kältemodul eingesetzt werden. Die Kälteeinheit kann leistungsspezifisch konfiguriert werden. Durch die Reduzierung der Modulzahl kann die Anlagenkälteleistung auf den spezifischen Anwendungsfall angepasst werden. Falls neue gesetzliche Vorschriften und Anforderungen einzuhalten sind, können die Kältemodule einfach durch Austausch ersetzt werden. Es können beispielsweise neue Kältemodule mit natürlichen, umweltfreundlichen Kältemitteln zum Einsatz kommen, soweit entsprechend gesetzliche Fristen erreicht sind. Eine aufwendige Umrüstung des gesamten Kältesystems ist nicht mehr notwendig. Hierdurch ist auch eine flexible Konfiguration bei internationalen Transportfahrten möglich, wenn unterschiedliche länderspezifische gesetzliche Bestimmungen einzuhalten sind.

Besonders vorteilhaft ermöglicht aber der einfache Austausch der Kältekreismodule eine optimierte Wartung. Hierzu können in entsprechenden Wartungsstationen Kältekreismodule vorrätig gehalten werden und bei Bedarf gegen schadhafte Kältekreismodule in einfacher Weise ausgetauscht werden. Aufgrund der sicher gekapselten Transportierbarkeit der Kältekreismodule wird der Reparatur- und Serviceaufwand bei entsprechenden Kühl-Sattelaufliegern erheblich reduziert.

Besonders vorteilhaft kann das Energieversorgungssystem darüber hinaus derart ausgelegt sein, dass die einzelnen Elektromotoren der Kühleinheit von einer niedrigeren zu einer höheren Drehzahl hochfahrbar sind und umgekehrt, um insbesondere beim Anfahren der Kühlung die Anlaufströme zu minimieren. Dieser Vorgang kann vorteilhaft in den unterschiedlichen Betriebszuständen jeweils anders aussehen, da der Momentenbedarf aller Elektromotoren, beispielsweise der Verdichtermotoren, in Abhängigkeit des thermodynamischen Zustandes des Kältemittels variiert. Zusätzlich zur Reduktion der Anlaufströme trägt das modulare Konzept des erfindungsgemäßen Kühlsystems zur Leistungsminimierung bei, da die hier zu erzeugende Kälteleistung auf mehrere Elektromotoren aufgeteilt werden kann. Die Elektromotoren können zu jedem beliebigen Zeitpunkt geregelt oder gesteuert, hoch oder runter gefahren werden. Aufgrund der erheblichen Reduktion der Anlaufströme im Vergleich zu Systemen gemäß dem Stand der Technik der benötigte Bauraum reduziert werden, was sich in vergleichsweise niedrigeren Modulhöhen niederschlägt. Darüber hinaus lässt sich das modular aufgebaute Kühlsystem wesentlich einfacher regeln und steuern.

insgesamt wird durch die erfindungsgemäße Lösung ein redundant arbeitendes Kühlsystem geschaffen, das aufgrund der Redundanz eine höhere Verfügbarkeit im Vergleich zu konventionellen Kühlsystemen aufweist.

Der modulare Aufbau ermöglicht es auch, modulbezogene Diagnosesysteme vorzusehen, die bei der Wartung der einzelnen Module von besonderem Vorteil sind.

Ein weiterer Aspekt der Erfindung ergibt sich aus dem Verfahrensanspruch 9, der die einfache Austauschbarkeit der Kältekreismodule beinhaltet.

Weitere Merkmale, Einzelheiten und Vorteile der Erfindung werden anhand von in der Zeichnung näher dargestellten Ausführungsbeispielen erläutert. Es zeigen:
- Figur 1:: eine Zugmaschine mit einem teilweise geschnitten dargestellten Kühl-Sattelaufliegers mit einem Kühlsystem gemäß einer Ausführungsform der vorliegenden Erfindung,
- Figur 2:: eine schematische Darstellung des Kühlkreislaufs eines Kältekreismoduls gemäß der vorliegenden Erfindung.
- Figur 3:: Eine schematische Darstellung des modularen Aufbaus einer Kühleinheit gemäß der vorliegenden Erfindung.
- Figur 4:: ein Anlagenschema des erfindungsgemäßen Kühlsystems.
- Figur 5:: ein Anlagenschema einer abgewandelten Ausführungsform des erfindungsgemäßen Kühlsystems in schematischer Darstellung.
- Figur 6:: eine weitere abgewandelte Ausführungsform des erfindungsgemäßen Kühlsystems in schematischer Darstellung.
- Figur 7:: eine Ausführungsform des erfindungsgemäßen Kühlsystems in unterschiedlichen Schnittdarstellungen.
- Figur 8:: eine Ansicht von außen und ein Schnitt durch die Ausführungsform des Kühlsystems nach Figur 7.
- Figur 9:: eine weitere Ausführungsform eines erfindungsgemäßen Kühlsystems in unterschiedlichen Schnittdarstellungen und
- Figur 10:: eine Außenansicht des Kühlsystems nach Figur 9 sowie eine weitere Schnittdarstellung dieses Systems.

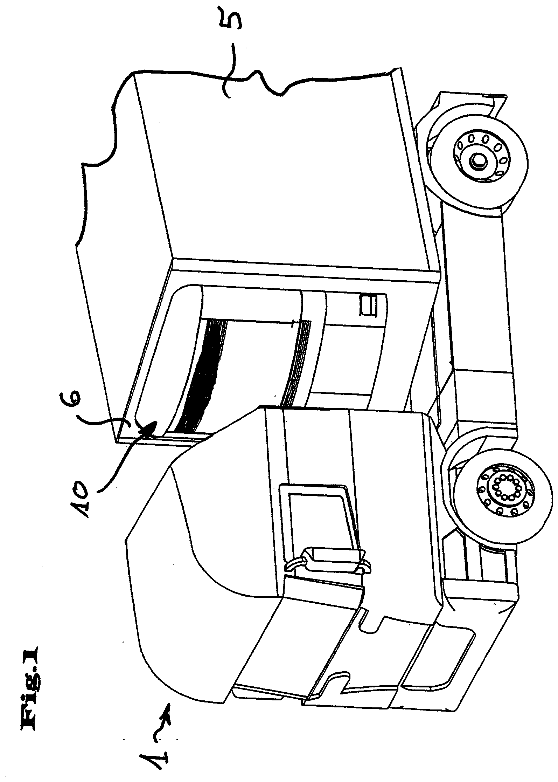

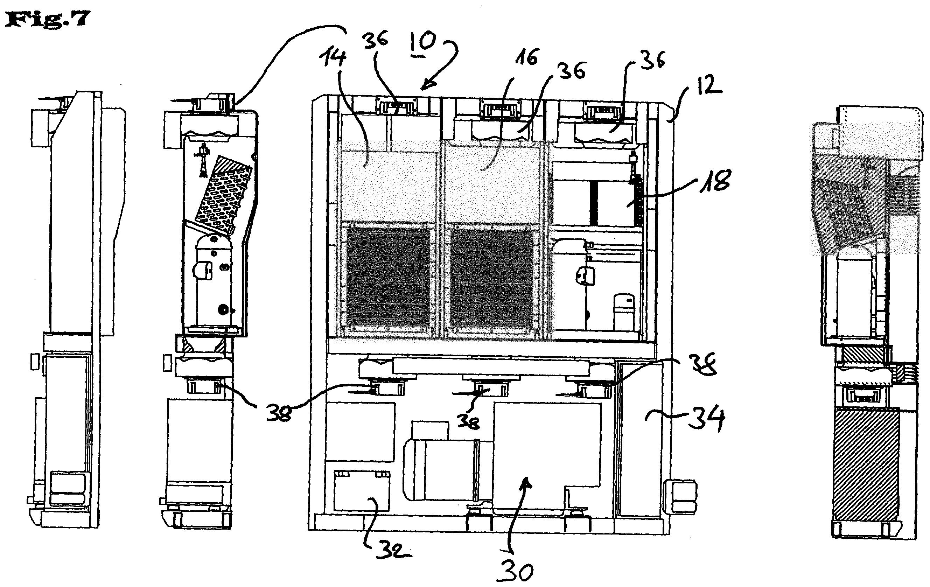

Figur 1 zeigt einen teilweise weggeschnittenen Kühl-Sattelauflieger 5, der von einer Zugmaschine 1 gezogen wird. An der Vorderwand 6 des Kühl-Sattelaufliegers 5 ist ein Kühlsystem 10 angeordnet. Bereits aus der Figur 1 ist zu sehen, dass die Gesamtabmessung des Kühlsystems 10 sehr kompakt gestaltet ist. Der Aufbau des Kühlsystems 10 ergibt sich aus den hier beispielhaft dargestellten Ausführungsformen gemäß der Figuren 7 und 8 bzw. 9 und 10.

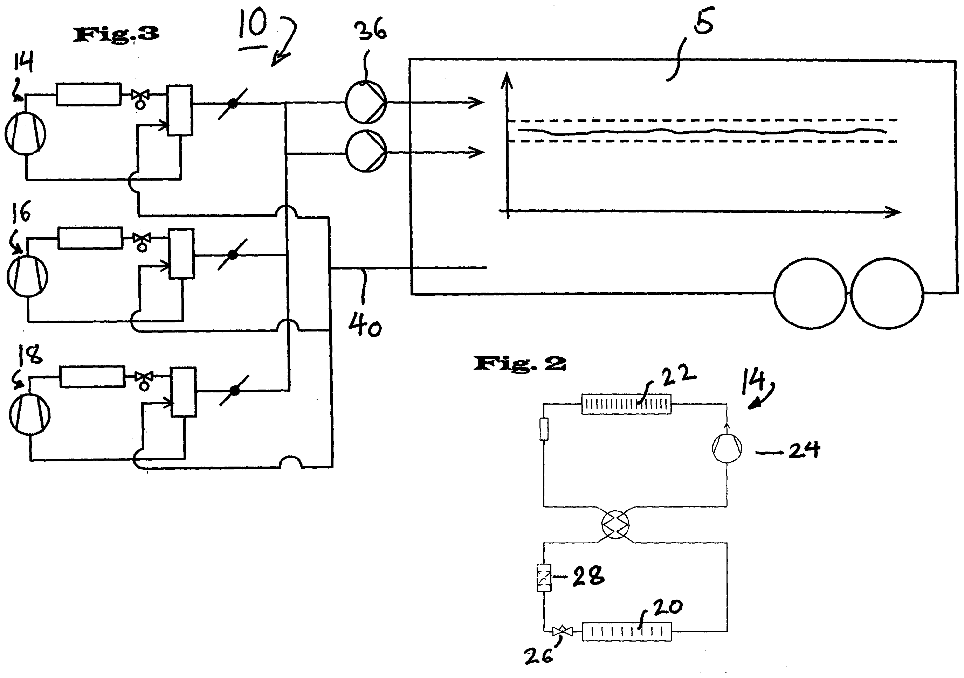

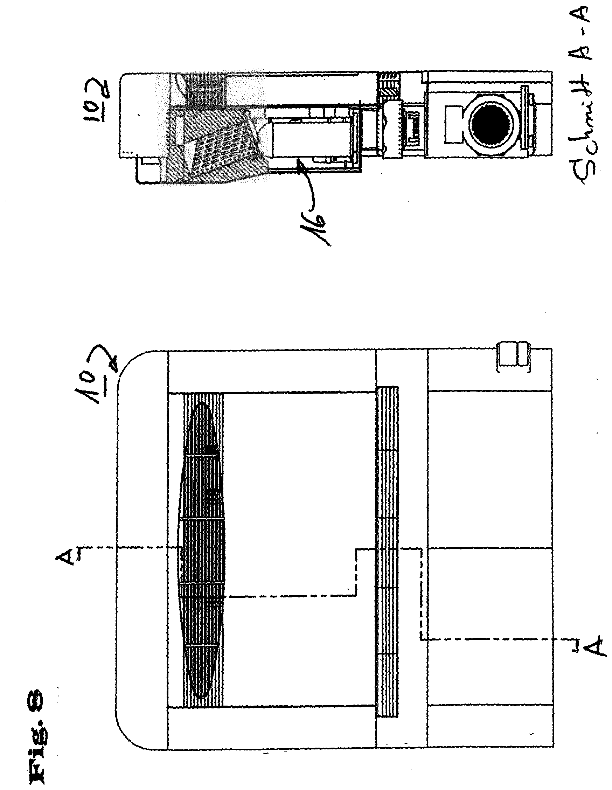

Wie anhand des Ausführungsbeispiels gemäß der teilweise geschnittenen Figuren 7 und 8 dargestellt ist, weist das Kühlsystem 10 einen Rahmen 12 auf, in welchen drei Aufnahmeöffnungen für Kältekreismodule 14, 16 und 18 vorgesehen sind. Die einzelnen Kältekreismodule 14, 16 und 18 sind jeweils identisch aufgebaut. Der Kühlkreislauf der einzelnen Module entspricht dabei dem Aufbau, wie er in Figur 2 schematisch dargestellt ist. In üblicher Weise besteht der Kältekreislauf eines Moduls 14, 16, 18 aus einem Verdampfer 20, einem Verflüssiger 22, einer Verdichtereinheit 24, sowie einem Entspannungsventil 26 und einer Filtertrocknungseinheit 28. Der Kühlkreislauf ist somit konventionell aufgebaut und entspricht dem üblichen Aufbau einer Kaltdampfanlage. Allerdings ist entsprechend der vorliegenden Erfindung im Kühlsystem 10 nicht nur ein Kühlkreislauf 14 enthalten. Vielmehr sind im hier dargestellten Ausführungsbeispiel drei Kältekreismodule 14, 16 und 18 enthalten, die jeweils gleich aufgebaute Kühlkreisläufe entsprechend der Figur 2 enthalten.

Die einzelnen Kältekreismodule müssen allerdings nicht, wie im hier dargestellten Ausführungsbeispiel beschrieben, genau den gleichen Aufbau nachweisen. So kann hier beispielsweise bei Bedarf auch ein oder ggf. auch mehrere kryogenische Module eingesetzt werden, d.h. Module, in denen entsprechende Tanks mit flüssigem Stickstoff bzw. flüssigem Kohlendioxid enthalten sind, die über ein geeignetes Düsensystem in den Innenraum des Kühl-Sattelaufliegers eingespritzt werden können.

In der in den Figuren 7 und 8 dargestellten Ausführungsvariante wird nun deutlich, dass die Kältekreismodule 14, 16 und 18 im Wesentlichen die Komponenten des Kühlkreislaufs beinhalten. Sämtliche weiteren Komponenten des Kühlsystems sind aber zentral und fest im Gestell 12 angeordnet bzw. aufgehängt. Es handelt sich hier zum einen um die Energieversorgungseinheit 30, die aus einem Dieselmotor und einem an diesen angeflanschten selbsterregten oder fremderregten Asynchrongenerator besteht. Der Generator dient zur Versorgung sämtlicher elektrischer Einheiten im Kühlsystem 10. Des Weiteren ist eine Batterie 32 und ein Energieversorgungssystem 34 im Gestell 12 angeordnet. Beim Energieversorgungssystem handelt es sich um die übliche Leistungselektronik zur Ansteuerung der einzelnen Elektromotoren und die zugehörigen Steuerungs- und Regelkomponenten. Getrennt von den Kältekreismodulen 14, 16 und 18 sind die jeweiligen Lüfter angeordnet. Im hier dargestellten Ausführungsbeispiel sind pro Modul gesonderte Zuluftlüfter 36 und Verflüssigerlüfter 38 vorgesehen. Diese Komponenten verbleiben also auch bei Entnahme der jeweiligen Kältekreismodule 14, 16 und 18 fest im Gestell 12 des Kühlsystems 10.

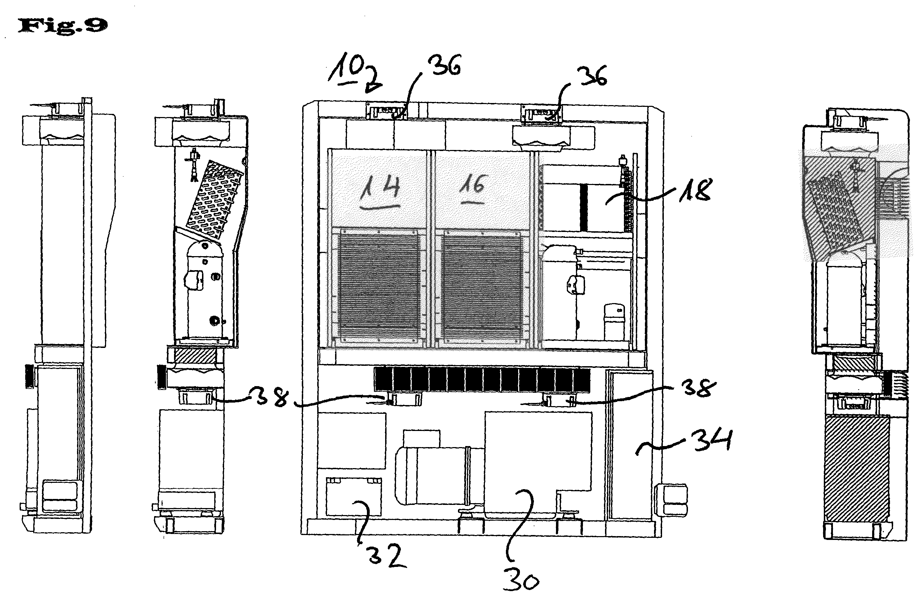

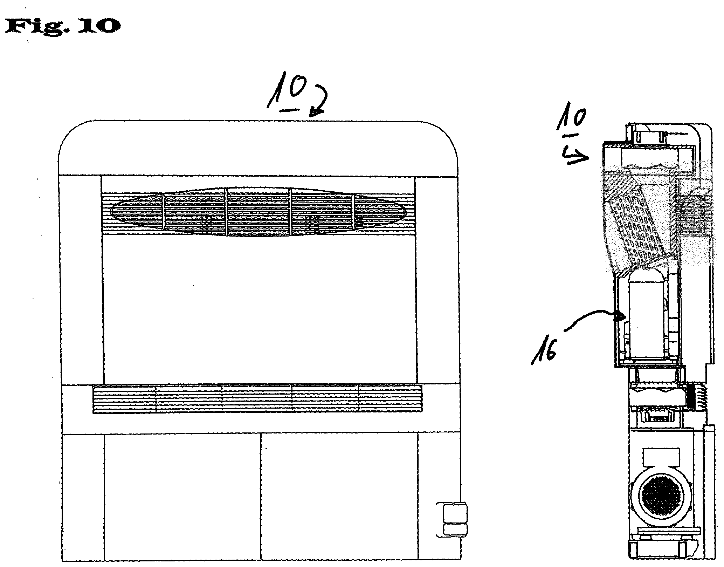

Die Ausführungsvariante gemäß der Figuren 9 und 10 entspricht im Wesentlichen derjenigen gemäß den Figuren 7 und 8. Sie unterscheidet sich allerdings dahingehend, dass hier für die drei Kältekreismodule 14, 16 und 18 nur jeweils zwei Zuluftlüfter 36 bzw. zwei Verflüssigerlüfter 38 vorhanden sind. Durch diese Variante kann nochmals Gewicht und Platz gespart werden.

In Figur 3 ist schematisch dargestellt, wie der Luftaustausch zwischen der Transporteinheit, d.h. dem zu kühlenden Innenraum des Kühl-Sattelaufliegers 5 und dem Kühlsystem 10 abläuft. Hier ist die Kühlleistung der drei Kältekreismodule 14, 16, und 18 parallel geschaltet. Über die zwei Zuluftlüfter 36 wird gekühlte Luft über entsprechende Leitungen in den Innenraum des Kühl-Sattelaufliegers 5 eingeblasen. Entsprechend der eingeblasenen Luft wird Luft aus dem Innenraum des Kühl-Sattelaufliegers über eine Leitung 40 zurückgeführt.

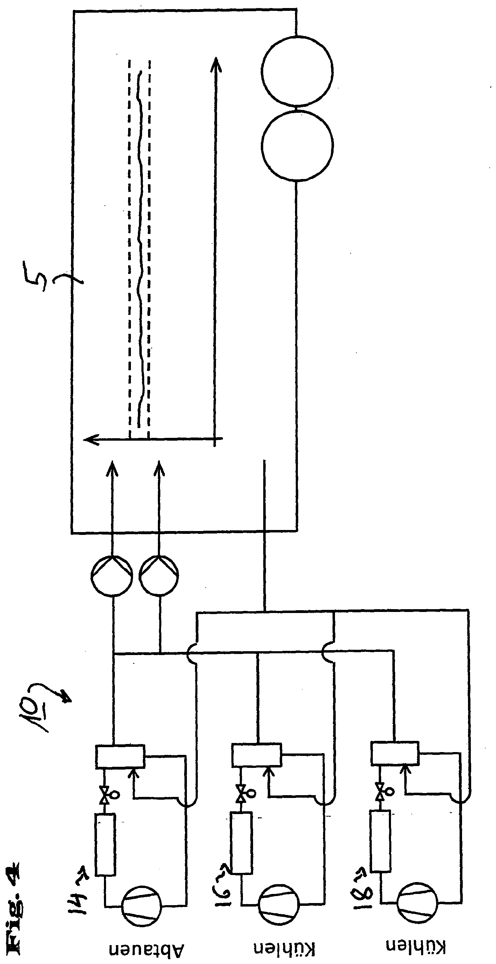

Anhand der Figur 4 wird schematisch dargestellt, wie über Zu- und Abschaltung der unabhängigen Kältemodule die Gesamtkälteleistung des Kühlsystems 10 an die Lastanforderung und Temperaturregelgüte des Kühl-Sattelaufliegers ohne eine Verschlechterung des Anlagewirkungsgrades angepasst werden kann. Wird nämlich nur ein Kältekreismodul abgetaut, wie in der Darstellung gemäß Figur 4 anhand des beispielhaft abgetauten Kältekreismoduls 14 gezeigt ist, kann mit den beiden übrigen Kältekreismodulen 16 und 18 der Innenraum des Kühltransportkontainers weiterhin im gewünschten Umfang gekühlt werden. Wie anhand des schematischen Anlagenschemas in der Figur 4 dargestellt, wird während des Abtaumodus das Kältekreismodul 14 von den Luftaustauschleitungen getrennt. Hierzu können in nicht näher dargestellten Art und Weise beispielsweise Sperrklappen vorgesehen sein.

Innerhalb des hier dargestellten Innenraums des Kühl-Sattelaufliegers 5 ist der Temperaturverlauf über die Zeit dargestellt. Sowohl im normalen Kühlbetrieb wie auch im Abtaumodus, bei dem die Kältekreismodule abwechselnd abgetaut werden, können durch Kombination der Kältekreismodule zur Kühlung des Innenraums des Kühl-Sattelaufliegers 5 die Temperaturvorgaben eingehalten werden.

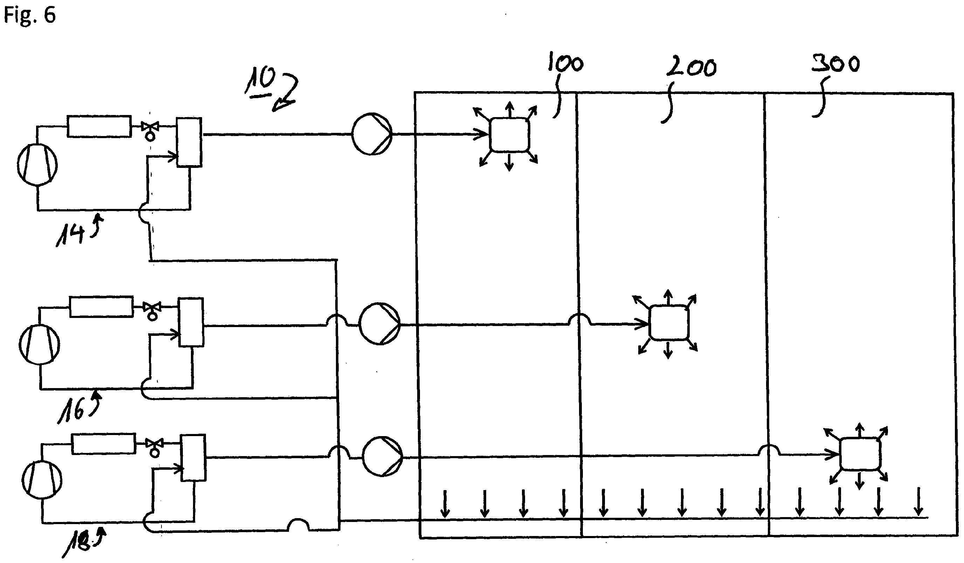

Anhand der Figur 6 ist eine Ausführungsform gezeigt, die in besonders vorteilhafter Weise mit den getrennt vorgesehenen Kältekreismodulen 14, 16 und 18, die im Kühlsystem 10 vorgesehen sind, ausgeführt werden kann. Hier werden die einzelnen Kältekreismodule jeweils zur gesonderten Kühlung von verschiedenen Temperaturzonen innerhalb des zu kühlenden Raums des Kühl-Sattelaufliegers 5 verwendet. Wie hier dargestellt ist, wird das Kältemodul 14 zur Kühlung einer Zone 100, das Kältemodul 16 zur Kühlung einer Zone 200 und das Kältekreismodul 18 zur Kühlung einer Zone 300 verwendet. Durch entsprechende Anpassung der Module kann die gewünschte Temperatur in den jeweiligen unterschiedlichen Kühlzonen unterschiedlich eingestellt werden. Die von den Kältekreismodulenabgehenden Luftkanäle zur Versorgung der Zonen werden in hier nicht dargestellter Weise in der Fahrzeugdecke verlegt.

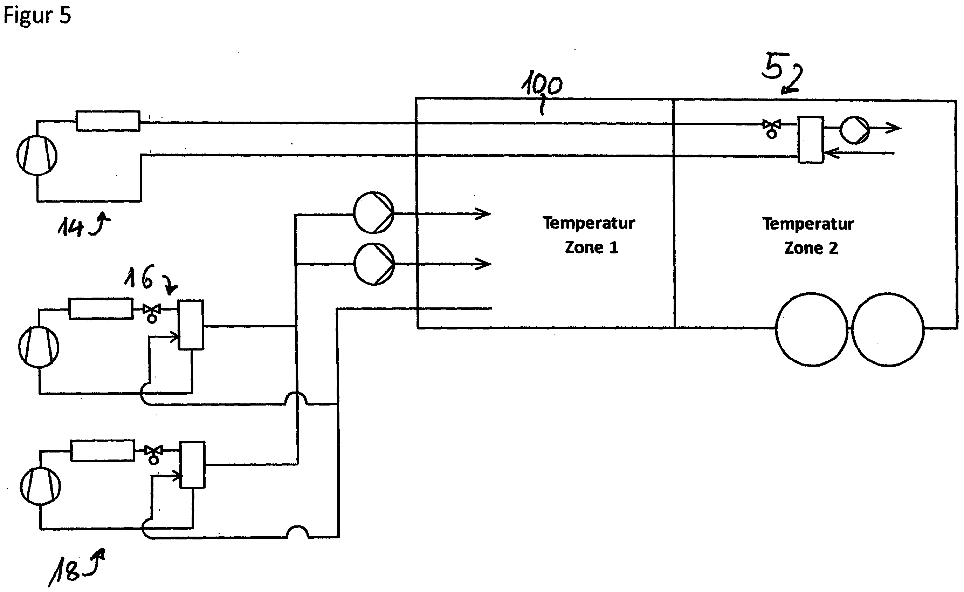

Schließlich zeigt die Figur 5 eine weitere modifizierte Ausführungsform der Erfindung. Hier sind im Innenraum des Kühl-Sattelaufliegers 5 wiederum unterschiedliche Temperaturzonen 100 und 200 vorhanden. Während die Temperaturzone 100 über die Kältekreismodule 16 und 18 mit Kühlluft versorgt wird, wobei die entsprechend zurückgeführte Luft ebenfalls nur den beiden Kältekreismodulen 16 und 18 zugeführt wird, weist das Kältekreismodul 14 eine von den Kältekreismodulen 16 und 18 unterschiedliche Bauform auf. Hier verbleibt im Modul lediglich der Verdichter und der Verflüssiger, während die Verdampfereinheit, der zugehörige Zuluftlüfter und das Entspannungsventil getrennt vom Modul 14 in die Temperaturzone 200 im Inneren des Kühl-Sattelaufliegers 5 verlegt werden. Sowohl die Luftströme wie auch die Kältemittelströme sind über entsprechende Leitungen miteinander verbunden. Der Nachteil des komplexeren Aufbaus wird hier durch eine besonders gute und effiziente Kühlleistung in dem zu kühlenden Bereich 200 ausgeglichen.

Im Rahmen der Erfindung sind weitere Konfigurationen durch die Auswahl der im Kühlsystem eingesetzten Kältekreismodule im Rahmen der Patentansprüche möglich.

## Patentansprüche

1. Transporteinheit, insbesondere Kühl-Sattelauflieger (5), Kühlanhänger oder Kühltransportcontainer, umfassend ein Kühlsystem (10) mit mindestens einer elektrisch angetriebenen Kühleinheit, die im Wesentlichen aus einer Verdampfereinheit, einer Verflüssigereinheit und einer Verdichtereinheit besteht und in einem gemeinsamen Gehäuse (12) platzsparend angeordnet ist, wobei in dem gemeinsamen Gehäuse (12) zusätzlich mehrere Zuluftlüfter (36) angeordnet sind, wobei die Kühleinheit mindestens zwei gleich aufgebaute, austauschbare und mit den Zuluftlüftern (36) verbundene Kältekreismodule (14, 16, 18) aufweist, die über Luftaustauschleitungen mit einem Kühlraum der Transporteinheit verbunden sind und jeweils den Kältemittelkreislauf mit Verdampfereinheit (20), Verflüssigereinheit (22) und Verdichtereinheit (24) enthalten,
**dadurch gekennzeichnet,**
**dass** die mindestens zwei Kältekreismodule (14, 16, 18) einzeln sequentiell abtaubar sind, wobei jedes der mindestens zwei Kältekreismodule (14, 16, 18) in einem Abtaumodus durch Abschalten eines Zulüfters (36) vom Kühlraum abtrennbar ist, sodass keine Abtauwärme in den Kühlraum eingebracht wird, während jeweils mindestens ein anderes der mindestens zwei Kältekreismodule (14, 16, 18) die Kühlleistung zur kontinuierlichen Kühlung des Kühlraums aufrechterhält, wobei die Kälteleistung jedes der mindestens zwei Kältekreismodule (14, 16, 18) so ausgelegt ist, dass es die für die Beibehaltung des stationären Kühlbetriebs notwendige Kälteleistung zur Verfügung stellen kann.

2. Transporteinheit nach Anspruch 1, **dadurch gekennzeichnet, dass** in dem Gehäuse (12) ein zentraler Stromgenerator, ein diesen antreibender Verbrennungsmotor und/oder eine diesen antreibenden andere Primärenergiequelle, eine gemeinsame Batterie (32), mindestens ein zentrales elektrisches Energieversorgungssystem (34) und mindestens ein gemeinsamer Verflüssigerlüfter (38) zusammen mit den mindestens zwei auswechselbaren Kältekreismodulen (14, 16, 18) angeordnet sind.

3. Transporteinheit nach einem der vorhergehenden Ansprüche, **dadurch gekennzeichnet, dass** der zentrale Stromgenerator ein selbst- oder fremderregter Asynchron- oder Synchrongenerator ist.

4. Transporteinheit nach einem der vorhergehenden Ansprüche, **dadurch gekennzeichnet, dass** die Kühleinheit drei Kältekreismodule (14, 16, 18) aufweist, die bei Bedarf zur Bereitstellung der geforderten Kälteleistung zu- und abschaltbar sind.

5. Transporteinheit nach einem der vorhergehenden Ansprüche, **dadurch gekennzeichnet, dass** über die mindestens zwei Kältekreismodule (14, 16, 18) entsprechende unterschiedliche Temperaturzonen (100, 200, 300) im Kühlraum versorgbar sind.

6. Transporteinheit nach einem der vorhergehenden Ansprüche, **dadurch gekennzeichnet, dass** ein Kältekreismodul (14, 16, 18) zur Kühlung einer bestimmten Temperaturzone im Kühlraum geteilt ausgeführt ist, wobei die Verdampfereinheit (20), das Expansionsventil und der Zuluftlüfter (36) in der Temperaturzone im Kühlraum angeordnet sind und über eine Flüssigkeits- und Saugleitung mit den im Kältekreismodul (14, 16, 18) verbliebenen Verdichtereinheit und Verflüssigereinheit verbunden sind.

7. Transporteinheit nach einem der vorhergehenden Ansprüche, **dadurch gekennzeichnet, dass** die Kältekreismodule (14, 16, 18) als abgeschlossene kleinste Austauscheinheit entnehmbar und sicher transportierbar sind.

8. Transporteinheit nach einem der vorhergehenden Ansprüche, **dadurch gekennzeichnet, dass** das Energieversorgungssystem (34) derart ausgelegt ist, dass die einzelnen Elektromotoren der Kühleinheit von einer niedrigeren zu einem höheren Leistungsniveau hochfahrbar sind und umgekehrt, um insbesondere beim Anfahren der Kühlung die Anlaufströme zu minimieren.

9. Verfahren zum Wechseln eines austauschbaren Kältekreismoduls (14, 16, 18) in einem Kühlsystem (10) einer Transporteinheit nach einem der Ansprüche 1 -8, **gekennzeichnet durch** folgende Schritte:
- Lösen der Verbindung zwischen dem austauschbaren Kältekreismodul (14, 16, 18) und der Kühleinheit,
- Entnehmen des austauschbaren Kältekreismoduls (14, 16, 18),
- Einsetzen eines neuen austauschbaren Kältekreismoduls (14, 16, 18) und
- Anschließen der Verbindung zwischen dem neuen austauschbaren Kältekreismodul (14, 16, 18) und der Kühleinheit.

## Claims

1. A transport unit, more particularly a refrigerated semitrailer (5), refrigerated trailer or refrigerated transport container, comprising a cooling system (10) having at least one electrically driven cooling unit which consists substantially of an evaporator unit, a condenser unit and a compressor unit and is arranged in a space-saving manner in a common housing (12), wherein a plurality of intake air fans (36) are also arranged in the common housing (12), wherein the cooling unit has at least two identically constructed, exchangeable refrigeration circuit modules (14, 16, 18), which are connected to the intake air fans (36), are connected via air exchange lines to a cold-storage compartment of the transport unit, and each contain the refrigerant circuit comprising evaporator unit (20), condenser unit (22) and compressor unit (24),
**characterised in that**
the at least two refrigeration circuit modules (14, 16, 18) can be individually defrosted sequentially, wherein in a defrosting mode each of the at least two refrigeration circuit modules (14, 16, 18) can be separated from the cold-storage compartment by switching off an intake fan (36) so that no defrosting heat is introduced into the cold-storage compartment, while at least one other of the at least two refrigeration circuit modules (14, 16, 18) maintains the cooling capacity for continuous cooling of the cold-storage compartment, wherein the cooling capacity of each of the at least two refrigeration circuit modules (14, 16, 18) is designed in such a way that it can provide the cooling capacity necessary for maintaining stationary cooling.

2. The transport unit according to claim 1, **characterised in that** a central power generator, an internal combustion engine driving said power generator and/or another primary energy source driving said power generator, a common battery (32), at least one central electrical power supply system (34) and at least one common condenser fan (38) together with the at least two exchangeable refrigeration circuit modules (14, 16, 18) are arranged in the housing (12).

3. The transport unit according to one of the preceding claims, **characterised in that** the central power generator is a self-excited or separately excited asynchronous or synchronous generator.

4. The transport unit according to one of the preceding claims, **characterised in that** the cooling unit has three refrigeration circuit modules (14, 16, 18), which can be switched in and out as necessary to provide the required cooling capacity.

5. The transport unit according to one of the preceding claims, **characterised in that** the at least two refrigeration circuit modules (14, 16, 18) can supply corresponding different temperature zones (100, 200, 300) in the cold-storage compartment.

6. The transport unit according to one of the preceding claims, **characterised in that** a refrigeration circuit module (14, 16, 18) for cooling a specific temperature zone in the cold-storage compartment has a split design, wherein the evaporator unit (20), the expansion valve and the intake air fan (36) are arranged in the temperature zone in the cold-storage compartment and are connected via a liquid and intake line to the compressor unit and condenser unit remaining in the refrigeration circuit module (14, 16, 18).

7. The transport unit according to one of the preceding claims, **characterised in that** the refrigeration circuit modules (14, 16, 18) can be removed and securely transported as a self-contained smallest exchange unit.

8. The transport unit according to one of the preceding claims, **characterised in that** the power supply system (34) is designed in such a way that the individual electric motors of the cooling unit can be ramped from a lower to a higher power output level and vice versa, in particular to minimise the starting currents when cooling is started.

9. A method for changing an exchangeable refrigeration circuit module (14, 16, 18) in a cooling system (10) of a transport unit according to one of claims 1-8, **characterised by** the following steps:
- releasing the connection between the exchangeable refrigeration circuit module (14, 16, 18) and the cooling unit,
- removing the exchangeable refrigeration circuit module (14, 16, 18),
- inserting a new exchangeable refrigeration circuit module (14, 16, 18), and
- establishing the connection between the new exchangeable refrigeration circuit module (14, 16, 18) and the cooling unit.

## Revendications

1. Unité de transport, notamment semi-remorque frigorifique (5), remorque frigorifique ou conteneur de transport frigorifique, comprenant un système frigorifique (10) comportant au moins une unité frigorifique à entraînement électrique qui se compose essentiellement d'une unité d'évaporateur, d'une unité de condenseur et d'une unité de compresseur et qui est disposée dans un boîtier commun (12) de manière peu encombrante, plusieurs ventilateurs d'air frais (36) étant disposés en plus dans le boîtier commun (12), l'unité frigorifique présentant au moins deux modules de circuit frigorifique (14, 16, 18) remplaçables, de conception identique et reliés aux ventilateurs d'air frais (36), lesdits modules de circuit frigorifique étant reliés à un espace frigorifique de l'unité de transport par le biais de conduites d'échange d'air et contenant respectivement le circuit de fluide frigorifique avec l'unité d'évaporateur (20), l'unité de condenseur (22) et l'unité de compresseur (24),
**caractérisée en ce que**
les au moins deux modules de circuit frigorifique (14, 16, 18) peuvent être dégivrés individuellement de manière séquentielle, chacun des au moins deux modules de circuit frigorifique (14, 16, 18) pouvant être séparé de l'espace frigorifique dans un mode de dégivrage en coupant un ventilateur refoulant (36), de telle sorte qu'aucune chaleur de dégivrage n'est introduite dans l'espace frigorifique pendant que respectivement au moins un autre des au moins deux modules de circuit frigorifique (14, 16, 18) maintient la puissance frigorifique pour la réfrigération continue de l'espace frigorifique, la puissance frigorifique de chacun des au moins deux modules de circuit frigorifique (14, 16, 18) étant dimensionnée de manière à pouvoir fournir la puissance frigorifique nécessaire pour le maintien du mode de réfrigération stationnaire.

2. Unité de transport selon la revendication 1, **caractérisée en ce qu'**un générateur de courant central, un moteur à combustion interne entraînant celui-ci et/ou une autre source d'énergie primaire entraînant celui-ci, une batterie (32) commune, au moins un système d'alimentation en énergie électrique (34) central et au moins un ventilateur de condenseur (38) commun sont disposés dans le boîtier (12) conjointement avec les au moins deux modules de circuit frigorifique (14, 16, 18) remplaçables.

3. Unité de transport selon l'une des revendications précédentes, **caractérisée en ce que** le générateur de courant central est un générateur synchrone ou asynchrone autoexcité ou à excitation séparée.

4. Unité de transport selon l'une des revendications précédentes, **caractérisée en ce que** l'unité frigorifique présente trois modules de circuit frigorifique (14, 16, 18) qui peuvent être connectés ou coupés selon les besoins pour fournir la puissance frigorifique requise.

5. Unité de transport selon l'une des revendications précédentes, **caractérisée en ce que**, par le biais des au moins deux modules de circuit frigorifique (14, 16, 18), il est possible d'alimenter des zones de température (100, 200, 300) différentes correspondantes dans l'espace frigorifique.

6. Unité de transport selon l'une des revendications précédentes, **caractérisée en ce qu'**un module de circuit frigorifique (14, 16, 18) pour la réfrigération d'une zone de température donnée dans l'espace frigorifique est réalisé divisé, l'unité d'évaporateur (20), le détendeur et le ventilateur d'air frais (36) étant disposés dans la zone de température dans l'espace frigorifique et étant reliés par le biais d'une conduite de liquide et d'aspiration à l'unité de compresseur et à l'unité de condenseur demeurées dans le module de circuit frigorifique (14, 16, 18).

7. Unité de transport selon l'une des revendications précédentes, **caractérisée en ce que** les modules de circuit frigorifique (14, 16, 18) peuvent être retirés et transportés de manière sûre en tant qu'unité remplaçable fermée la plus petite.

8. Unité de transport selon l'une des revendications précédentes, **caractérisée en ce que** le système d'alimentation en énergie (34) est conçu de telle manière que les moteurs électriques individuels de l'unité frigorifique peuvent être amenés d'un niveau de puissance plus faible à un niveau de puissance plus élevé et inversement pour minimiser les courants de démarrage en particulier lors de la mise en marche de la réfrigération.

9. Procédé de changement d'un module de circuit frigorifique (14, 16, 18) remplaçable dans un système frigorifique (10) d'une unité de transport selon l'une des revendications 1 à 8, **caractérisé par** les étapes suivantes consistant à :
- détacher la liaison entre le module de circuit frigorifique (14, 16, 18) remplaçable et l'unité frigorifique,
- retirer le module de circuit frigorifique (14, 16, 18) remplaçable,
- insérer un module de circuit frigorifique (14, 16, 18) remplaçable neuf et
- raccorder la liaison entre le module de circuit frigorifique (14, 16, 18) remplaçable neuf et l'unité frigorifique.
